# EUROPÄISCHE PATENTSCHRIFT

(11) **EP 1 605 387 B1**
(45) Veröffentlichungstag und Bekanntmachung des Hinweises auf die Patenterteilung: **19.11.2008**
(21) Anmeldenummer: 05018041.3
(22) Anmeldetag: 09.07.2003
(51) Int. Cl.: G06K 7/00, H01R 13/24, G06K 13/08

(54) **Kontaktiervorrichtung für eine Chipkarte, insbesondere für eine SIM-Karte**
Contacting device for a chip card and in particular for a SIM card
Dispositif à contacts pour une carte à puce, en particulier pour une carte SIM

(30) Priorität: 15.08.2002 DE 10238156
(43) Veröffentlichungstag der Anmeldung: 14.12.2005
(62) Teilanmeldung aus: 03015425.6
(73) Patentinhaber: Lumberg Connect GmbH, 58579 Schalksmühle (DE)
(72) Erfinder: Pellizari, Dirk, 42327 Wuppertal (DE)
(74) Vertreter: Ostriga, Sonnet, Wirths & Roche

(56) Entgegenhaltungen:
- EP-A- 0 520 080
- DE-A- 19 521 721
- US-A- 6 149 466
- US-B1- 6 319 036

## Beschreibung

Die Erfindung betrifft eine Kontaktiervorrichtung für eine Chipkarte, insbesondere für eine SIM-Karte, nach dem Oberbegriff des Anspruchs 1.

Derartige Kontaktiervorrichtungen, in der Umgangssprache und auch in der Patentliteratur häufig unzutreffend mit "Chipkarten-Leser", "SIM-Card-Reader" od. dgl. bezeichnet, dienen zur Halterung und Bereitstellung der elektrischen Kontaktierung der Kontakte einer Chip-oder SIM-Karte (SIM = "Subscriber Identity Module") mit Leiterbahnen eines Schaltungsträgers wie insbesondere einer Leiterplatte, die in einem elektronischen Gerät, z.B. einem Mobiltelefon, untergebracht ist.

Eine Kontaktiervorrichtung solcher Art ist beispielsweise aus DE 195 21 721 A1 bekannt, von der die vorliegende Erfindung ausgeht. Dabei sind im Kontaktträger neben den sechs üblichen Lesekontakten wenigstens zwei zusätzliche Schaltkontakte untergebracht, die dazu dienen, bei geschlossenem Deckel der Kontaktiervorrichtung, der aus Metall oder metallisiertem Kunststoff besteht, eine Erd- bzw. Masseverbindung zur Leiterplatte herzustellen und dadurch eine den EMV-Forderungen gemäße Schirmung zu ermöglichen. Des weiteren ist im Deckel eine Andruckfeder ausgebildet, die beim Einschieben der SIM-Karte in den geöffneten Deckel in Richtung zum Kontaktträger hin gedrückt wird und die nach Schließen des Deckels, der durch Längsverschieben in eine gesicherte Verriegelungslage verbracht wird, die Schaltkontakte kontaktiert, die sodann, also sequentiell, ihrerseits die Verbindung zur Masse der Leiterplatte herstellen.

Weitere Kontaktiervorrichtungen mit Schirmung sind aus DE 195 21 721 A1, EP 0 520 080 A1 und US 6,319,036 B1 bekannt.

Aufgabe vorliegender Erfindung ist insbesondere die Schaffung einer geschirmten Kontaktiervorrichtung, die in ihrem Aufbau vereinfacht ist.

Die erfindungsgemäße Lösung dieser Aufgabe besteht in den Merkmalen des unabhängigen Anspruchs 1. Dem entsprechend ist eine Kontaktiervorrichtung für eine Chipkarte, insbesondere für eine SIM-Karte eines elektronischen Geräts wie z.B. Chipkartenlesegerät, Mobiltelefon od.dgl., mit einem Kontaktträger mit darin aufgenommenen Kontaktelementen zur Verbindung der Kontakte der Chipkarte mit Leiterbahnen eines in dem Gerät enthaltenen Schaltungsträgers wie Leiterplatte, einem elektrisch leitfähigen Deckel, der schwenkbar am Kontaktträger gelagert ist, und eine Aufnahme für die SIM-Karte beinhaltet, und mit einer Einrichtung zur Schirmung durch eine leitende Verbindung zwischen dem Deckel und einer Erd-oder Massekontaktierungsfläche des Schaltungsträgers, wobei zusätzlich am Deckel und am Kontaktträger lösbare Verriegelungsmittel zur Halterung des Deckels in seiner geschlossenen Stellung vorgesehen sind, dadurch gekennzeichnet, dass wenigstens ein kontaktträgerseitiges, elektrisch leitfähiges Verriegelungsmittel vorgesehen ist, welches an einen Erd- oder Massekontakt des Schaltungsträgers angeschlossen ist und mit dem der Deckel in seiner Schließstellung eines lösbare Riegelverbindung eingeht.

Im Unterschied zum Stand der Technik erfolgt der Masseschluss nicht sequentiell (Deckel - Schaltkontakt; Schaltkontakt - Platine), sondern unmittelbar durch direkte Kontaktierung des Deckels mit dem Massepotential der elektronischen Schaltung. Um dies zu erreichen ist es lediglich erforderlich, eine Stelle zur Kontaktierung des Massepotentials im Gerätegehäuse frei zu lassen, damit diese Stelle vom deckelseitigen Kontaktabschnitt berührt werden kann. Besondere Kontakte wie die zusätzlichen Schaltkontakte entsprechend DE 195 21 721 A1 werden nicht benötigt.

Eine zweckmäßige und besonders vorteilhafte Weiterbildung besteht darin, dass ein kontaktträgerseitiges Verriegelungsmittel eine Riegellasche umfasst, mit der der Deckel bei Kontaktierung eine Art Schnappverbindung eingeht. Dabei kann an der Riegellasche eine Riegelzunge zur Verrastung des Deckels ausgebildet sein.

Des weiteren kann das im Kontaktträger aufgenommene Verriegelungsmittel wenigstens eine Kontaktierungsfläche wie SMD-Lötfüßchen aufweisen, die in der Ebene der Kontaktierungsflächen der Lesekontakte angeordnet ist, wobei insbesondere daran gedacht ist, dass das Verriegelungsmittel im Kontaktträger (gleich oder ähnlich wie die Lesekontakte) mit eingespritzt ist.

Die erfindungsgemäße Lösung weist die oben bereits geschilderten Vorzüge auf. Zusätzlich besteht ein wesentlicher Gedanke der Erfindung darin, die Schirmung der Kontaktiervorrichtung und die Verriegelung des Deckels am Kontaktträger in geschickter Weise miteinander zu vereinen. Zudem entsteht eine absolut sichere Zwangswirkung zwischen Schirmung und Deckel-Verriegelung.

Die Erfindung wird nachfolgend unter Bezugnahme auf in den beiliegenden Zeichnungen dargestellte Ausführungsbeispiele näher erläutert. Es zeigen:
- Fig. 1: eine perspektivische Darstellung einer Kontaktiervorrichtung entsprechend der Erfindung mit einem Kontaktträger und einem teilweise geöffneten Deckel,
- Fig. 2: eine perspektivische Seitenansicht einer in ein Gerät bzw. Geräteausschnitt eingesetzten Kontaktiervorrichtung bei geschlossenem Deckel,
- Fig. 3: eine vergrößerte Darstellung einer Einzelheit aus Fig. 2,
- Fig. 4: eine perspektivische Darstellung der Kontaktiervorrichtung mit Blickrichtung auf die Lötseite des Kontaktträgers, und
- Fig. 5: eine gegenüber Fig. 4 vergrößerte Darstellung einer Einzelheit.

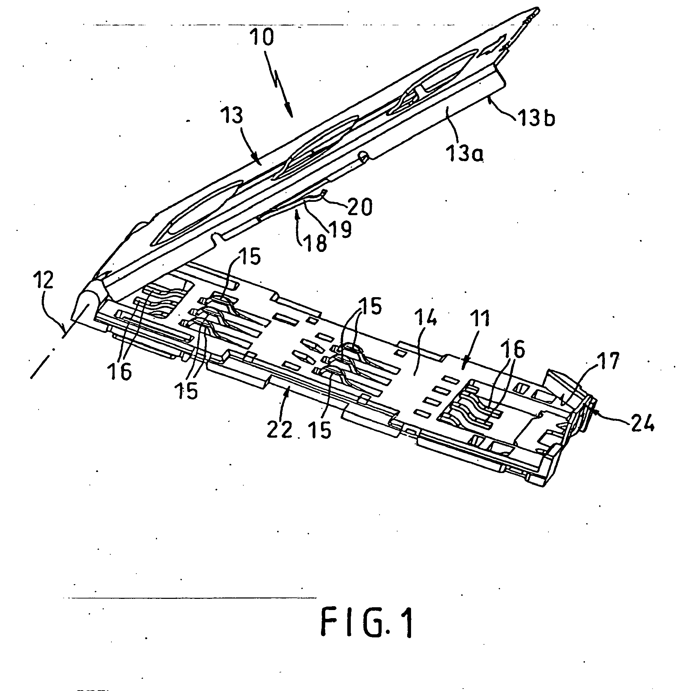

Fig. 1 zeigt eine insgesamt mit 10 bezeichnete Kontaktiervorrichtung für Chip-Karten, insbesondere für SIM-Karten, wie sie beispielsweise in Mobiltelefonen eingesetzt werden.

Die Kontaktiervorrichtung 10 umfasst einen Kontaktträger 11 und einen um eine Achse 12 schwenkbar daran angelenkten Deckel 13, wobei im dargestellten Ausführungsbeispiel die Schwenkachse 12 einer Schmalseite von Kontaktträger 11 und Deckel 13 zugeordnet ist.

Im Kontaktträger 11, dessen Korpus 14 aus elektrisch nicht leitendem Isoliermaterial, insbesondere aus Kunststoff besteht, sind - beim Ausführungsbeispiel sechs - Lesekontakte 15 angeordnet zur Kontaktierung mit Kontakten einer nicht dargestellten SIM-Karte, die in bekannter Weise zwischen Kontaktträger 11 und Deckel 13 in die Vorrichtung 10 eingesetzt wird. Mit 16 sind SMD-Lötfüßchen bezeichnet, die stoffschlüssiger Bestandteil der Lesekontakte 15 sind und die galvanische Verbindung zu einem ebenfalls nicht gezeigten Schaltungsträger, also insbesondere einer Leiterplatte dienen.

Mit 17 ist eine am Kontaktträger 11 angebrachte Kodier-Schrägfläche bezeichnet, die sicherstellt, dass die SIM-Karte, die ihrerseits bekanntermaßen eine entsprechend gebrochene Ecke aufweist, nur mit ihrer korrekten Ausrichtung in die Kontaktiervorrichtung 10 eingesetzt werden kann.

Der Deckel 13 besteht beim dargestellten Ausführungsbeispiel aus einem Blech-Stanz-Biegeteil, also aus einem elektrisch leitenden Material. Er könnte auch aus anderen leitfähigen Materialen bestehen, z.B. aus elektrisch leitendem oder leitfähig beschichtetem Kunststoff.

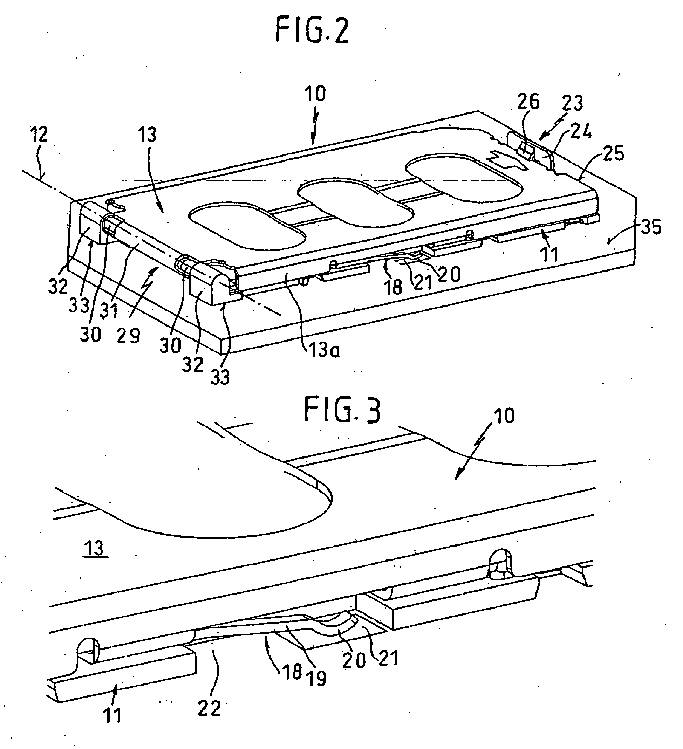

Wie ausgeführt, ist der Deckel 13 an seiner bezüglich Fig. 1 hinteren Schmalkante über die Schwenkachse 12 mit dem Kontaktträger 11 schwenkbar verbunden. Er kann deshalb von einer gegenüber der Darstellung in Fig. 1 noch weiter geöffneten Stellung bis in die Schließstellung verschwenkt werden, die in Fig. 2 dargestellt ist.

Eine erste Möglichkeit, eine in ihrem Aufbau vereinfachte, geschirmte Kontaktiervorrichtung zu schaffen, wird im folgenden beschrieben, ist jedoch nicht Bestandteil des Schutzbereiches dieser Anmeldung. Ein Merkmal des Deckels 13 besteht zunächst darin, dass er einen Kontaktabschnitt 18 aufweist. Dieser zungenförmige Kontaktabschnitt 18 ist beim Ausführungsbeispiel werkstoffeinheitlichstoffschlüssiger Bestandteil des Deckels 13, d.h. also insbesondere durch Stanzen und Biegen aus dem Deckel 13 selbst herausgeformt. Wie die Figuren erkennen lassen, ist der Kontaktabschnitt 18 einem aus der Hauptebene des Deckels heruntergebogenen Längsseitenrand 13a des Deckels 13 zugeordnet. Schließlich ist die Anordnung des Kontaktabschnitts 18 so getroffen, dass er innerhalb der zum Kontaktträger 11 weisenden Randkante 13b des Deckelrandes 13a angeordnet ist, dem gegenüber das freie Ende der Zunge 19 mit Richtung zum Kontaktträger 11 hin vorsteht.

Fig. 2 zeigt die Kontaktiervorrichtung 10 in einen Geräteausschnitt 35 eingesetzt, wobei nun der Deckel 13 geschlossen dargestellt ist. Da in der Schließstellung des Deckels 13 der Deckelrand 13a den Kontaktträger 11 seitlich zumindest teilweise übergreift, ist folglich der Kontaktabschnitt 18 gewissermaßen "voreilend" angeordnet. Das bedeutet, dass in der Schließstellung des Deckels der Kontaktabschnitt 18 mit seinem kontaktierungsbestimmenden Endabschnitt 20 eine Kontaktfläche 21 berühren und sich unter Federkraft auf ihr abstützen kann, die Teil einer ansonsten nicht näher gezeigten elektronischen Schaltung ist. Bei der Kontaktfläche 21 handelt es sich z.B. um einen Leiterbahnabschnitt des Massepotentials der elektronischen Schaltung.

Wie schließlich aus den Figuren noch zu erkennen ist, befindet sich der Kontaktabschnitt 18 am Deckel 13 relativ zum Kontaktträger 11 an einer Stelle, an der letzterer einen Randausschnitt 22 aufweist. Deshalb kann der Kontaktabschnitt 18 im wesentlichen noch innerhalb des Umrisses des Kontaktträgers 11 angeordnet werden, benötigt also keinen zusätzlichen Flächenbedarf.

Die anspruchsgemäße, in ihrem Aufbau vereinfachte, geschirmte Kontaktiervorrichtung wird nachfolgend dargestellt. Zur Verriegelung des Deckels 13 in seiner Schließstellung bezüglich des Kontaktträgers 11 ist zudem eine Verriegelungsanordnung vorgesehen, die insgesamt mit 23 bezeichnet ist. Diese umfasst einerseits am Kontaktträger 11 an seiner der Schwenkachse 12 gegenüberliegenden Schmalseite eine Riegellasche 24, die nach Art einer Clipsverbindung wiederlösbar mit einem Abschnitt des vorderen Randes 25 des Deckels 13 zusammenwirkt. Beim dargestellten Ausführungsbeispiel erfolgt die Verriegelung mittels einer keilförmigen Riegelzunge 26, die in die Bewegungsbahn der vorderen Randkante 25 des Deckels 13 hineinragt. Wird der Deckel geschlossen, bewegt seine Vorderkante 25 die federelastisch ausgebildete oder angeordnete Riegellasche 24 vorübergehend ausweichend, bis bei geschlossenem Deckel die Riegelzunge 26 die Deckelrandkante 25 hinterfängt, so wie dies in Fig. 2 dargestellt ist.

Durch Schließen des Deckels 13 werden die Kontaktkräfte auf die Kontakte 15 aufgebracht und in der Deckelschließstellung sichergestellt. Daraus resultiert für die Schließstellung der Vorrichtung 10; dass die Kontaktkräfte die sichere Verriegelung des Deckels 13 unterstützen.

Was die an der Stirnkante 25 des Deckels 13 angeordnete Riegellasche 24 betrifft, so sichert diese den Deckel 13 auch gegen ein unerwünschtes Verschieben in Richtung des in Fig. 2 auf die Riegellasche weisenden Pfeils. Eine solche Bewegung könnte ansonsten aufgrund vorhandener Toleranzen möglich sein.

Soll der Deckel 13 geöffnet werden, drückt man die Riegellasche 24 ein wenig nach außen, bis die Riegelzunge 26 die Deckelrandkante 25 wieder freigibt.

Die Riegellasche 24 kann einstückig-stoffschlüssiger Bestandteil des Isolierkörpers des Kontaktträgers 11 sein. Beim dargestellten Ausführungsbeispiel ist eher daran gedacht, die Riegellasche 24 an einem Metallbauteil auszubilden, und zwar einerseits aus Stabilitäts-und Elastizitätsgründen und andererseits aus Gründen, die nun beschrieben werden.

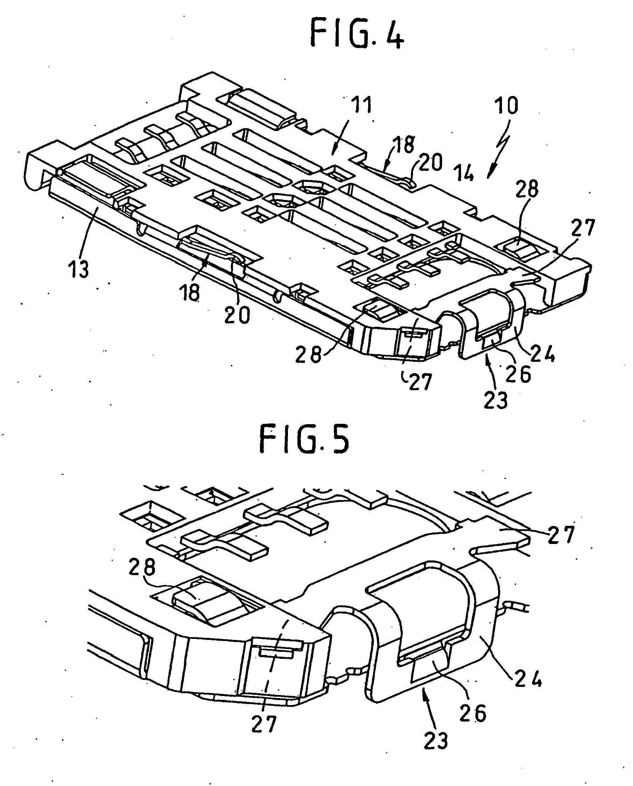

Die Fig. 4 und 5 zeigen die Anordnung einer aus elektrisch leitfähigem Material, insbesondere Metall bestehenden Riegelzunge 24. Mit ihren Verankerungsabschnitten 27 ist die Riegellasche 24 in den Isolierkörper 14 des Kontaktträgers 11 eingespritzt. Die Enden der Abschnitte 27 sind als SMD-Lötfüßchen 28 ausgebildet, womit die Riegellasche 24 und im übrigen auch der Isolierkörper 11 der Kontaktiervorrichtung auf dem Schaltungsträger, also insbesondere einer Leiterplatte, befestigt bzw. zusätzlich gehalten werden kann.

Entsprechend einem grundlegenden Gedanken der Erfindung ist die Riegellasche 24 - alternativ oder ergänzend zu dem bereits beschriebenen Kontaktabschnitt 18 - zur Schirmung der Kontaktiervorrichtung 10 vorgesehen und ausgestaltet. Im Unterschied zum bisher Beschriebenen ist daher anzumerken, dass in diesem Fall die SMD-Lötfüßchen 28 nicht nur zum mechanischen Halt auf der Leiterplatte dienen, sondern vor allem und in erster Linie zur galvanischen Verbindung mit einem dem Erd- oder Massepotential des Schaltungsträgers zugeordneten Kontaktfläche. In diesem Fall besteht das Bauteil, welches die SMD-Lötfüßchen 28 und die Riegellasche 24 aufweist, selbstverständlich aus elektrisch leitfähigem Material, vorzugsweise aus Metallblech.

Wird bei einer derartigen Kontaktiervorrichtung 10 der Deckel 13 geschlossen und gelangt er sodann in verriegelnden Kontakt mit der Riegellasche 24, erfolgt an dieser Stelle eine galvanische Verbindung zwischen Deckel 13 und dem Massepotential der elektronischen Schaltung des Geräts.

Wie am besten aus Fig. 2 ersichtlich, ist im Bereich der Schwenkachse 12 eine Gelenkverbindung 29 vorgesehen, die zur schwenkbeweglichen Lagerung des Deckels 13 relativ zum Kontaktträger 11 dient. Mit 30 sind kontaktträgerseitige Lagerzapfen bezeichnet, wohingegen der hintere umgerollte Rand 31 des Deckels 13 eine Lagerhülse ausbildet, in die die Lagerzapfen 30 gleitschlüssig eingreifen. Die Lagerzapfen 30 ragen von Lagerböckchen 32 ab, die - wie auch die Lagerzapfen 30 - aus elektrisch leitfähigem Material bestehen. Die Unterflächen 33 der Lagerböcke 32 können unmittelbar auf eine dem Erd- bzw. Massepotential zuzurechnende Leiterbahn eines Schaltungsträgers aufgelötet sein. Im übrigen wären die Lagerböckchen 32 im Isolierstoffkorpus 14 des Kontaktträgers 11 zu verankern, insbesondere in diesen teilweise einzuformen.

Da in diesem Fall über die Gelenkanordnung 29 eine unmittelbare galvanische Verbindung des Deckels 13 mit dem Erd- oder Massepotential der elektronischen Schaltung besteht, findet eine Abschirmung in jeder beliebigen Position des Deckels 13 statt und unabhängig davon, ob eine SIM-Karte in die Kontaktiervorrichtung 10 eingesetzt ist oder nicht.

Was die Aufnahme der SIM-Karte in der Kontaktiervorrichtung 10 betrifft, so ist diese nicht dargestellt. Es ist daran gedacht, wie an sich üblich, an der Unterseite des Deckels 13 - in der Regel durch Randumformungen - eine Führung auszubilden, so dass die SIM-Karte in den Deckel 13 eingeschoben werden kann, bevor dieser geschlossen wird.

## Patentansprüche

1. Kontaktiervorrichtung (10) für eine Chipkarte, insbesondere für eine SIM-Karte eines elektronischen Geräts wie z.B. Chipkartenlesegerät, Mobiltelefon od.dgl., mit
einem Kontaktträger (11) mit darin aufgenommenen Kontaktelementen (15) zur Verbindung der Kontakte der Chipkarte mit Leiterbahnen eines in dem Gerät enthaltenen Schaltungsträgers wie Leiterplatte,
einem elektrisch leitfähigen Deckel (13), der
schwenkbar am Kontaktträger (11) gelagert ist, und
eine Aufnahme für die SIM-Karte beinhaltet, und mit einer Einrichtung zur Schirmung durch eine leitende Verbindung zwischen dem Deckel (13) und einer Erd- oder Massekontaktierungsfläche (21) des Schaltungsträgers,
wobei zusätzlich am Deckel (13) und am Kontaktträger (11) lösbare Verriegelungsmittel (23) zur Halterung des Deckels (13) in seiner geschlossenen Stellung vorgesehen sind,
**dadurch gekennzeichnet,**
**dass** wenigstens ein kontaktträgerseitiges, elektrisch leitfähiges Verriegelungsmittel (24) vorgesehen ist, welches an einen Erd- oder Massekontakt des Schaltungsträgers angeschlossen ist und mit dem der Deckel (13) in seiner Schließstellung eine lösbare Riegelverbindung eingeht.

2. Kontaktiervorrichtung nach Anspruch 1, **dadurch gekennzeichnet, dass** ein kontaktträgerseitiges Verriegelungsmittel eine Riegellasche (24) umfasst, mit der der Deckel (13) bei Kontaktierung eine Art Schnappverbindung eingeht.

3. Kontaktiervorrichtung nach Anspruch 1 oder 2, **dadurch gekennzeichnet, dass** an der Riegellasche eine Riegelzunge (26) zur Verrastung des Deckels (13) ausgebildet ist.

4. Kontaktiervorrichtung nach einem der Ansprüche 1 bis 3, **dadurch gekennzeichnet, dass** das im Kontaktträger (11) aufgenommene Verriegelungsmittel (24) wenigstens eine Kontaktierungsfläche (28) wie SMD-Lötfüßchen aufweist, die vorzugsweise in der Ebene der Kontaktierungsflächen der Lesekontakte angeordnet ist.

5. Kontaktiervorrichtung nach einem der Ansprüche 1 bis 3, **dadurch gekennzeichnet, dass** zumindest ein Abschnitt (27) des Verriegelungsmittels (24) im Isolierkörper (14) des Kontaktträgers (11) mit eingespritzt ist.

## Claims

1. Bonding device (10) for a chip card, in particular for a SIM card of an electronic device such as a chip card reader, mobile telephone or similar, with
a contact carrier (11) with contact elements (15) received in it to connect the contacts of the chip card to tracks of a circuit carrier such as a printed circuit board which is contained in the device,
with an electrically conducting cover (13), which is carried on the contact carrier (11) so that it can pivot, and contains a receptacle for the SIM card,
and with a device for screening through a conducting connection between the cover (13) and an earth bonding surface (21) of the circuit carrier,
releasable locking means (23) to hold the cover (13) in its closed position being provided additionally on the cover (13) and on the contact carrier (11),
**characterized in that**
at least one electrically conductive locking means (24) is provided on the contact carrier side, and is connected to an earth contact of the circuit carrier, and with it the cover (13) in its closed position goes into a releasable locking connection.

2. Bonding device according to Claim 1, **characterized in that** a locking means on the contact carrier side includes a locking shackle (24), with which the cover goes into a kind of snap connection on bonding.

3. Bonding device according to Claim 1 or 2, **characterized in that** a locking tongue (26) is formed on the locking shackle to lock the cover (13).

4. Bonding device according to one of Claims 1 to 3, **characterized in that** the locking means (24) which is received in the contact carrier (11) has at least one bonding surface (28) such as SMD solder feet, which is preferably arranged in the plane of the bonding surfaces of the read contacts.

5. Bonding device according to one of Claims 1 to 3, **characterized in that** at least a section (27) of the locking means (24) is injected into the insulating body (14) of the contact carrier (11).

## Revendications

1. Dispositif de mise en contact (10) pour une carte à puce, en particulier une carte SIM d'un appareil électronique tel que, par exemple, un lecteur de carte à puce, un téléphone mobile ou analogue, avec :
un support de contact (11), muni d'élément de contact (15) y étant logés, pour relier les contacts de la carte à puce à des pistes conductrices d'un support de circuit contenu dans l'appareil telle qu'une carte de circuits imprimés,
un couvercle (13) conducteur de l'électricité, qui
est monté à pivotement sur le support de contact (11), et
contient un logement pour la carte SIM, et avec un dispositif d'écrantage au moyen d'une liaison conductrice entre le couvercle (13) et une surface de contact à la terre ou à la masse (21) du support de circuit,
où, en plus, sur le couvercle (13) et sur le support de contact (11), sont prévus des moyens de verrouillage (23) désolidarisables pour le maintien du couvercle (13) à sa position fermée,
**caractérisé en ce qu'**il
est prévu au moins un moyen de verrouillage (24) conducteur de l'électricité, situé sur le support de contact, raccordé à un contact à la terre ou à la masse du support de circuit et établissant avec le couvercle (13), placé à sa position de fermeture, une liaison à verrouillage désolidarisable.

2. Dispositif de mise en contact selon la revendication 1, **caractérisé en ce qu'**un moyen de verrouillage, situé sur le support de contact, comprend une patte de verrou (24), avec laquelle le couvercle (13) établit un genre de liaison à déclic lors de l'établissement du contact.

3. Dispositif de mise en contact selon la revendication 1 ou 2, **caractérisé en ce que** sur la patte de verrou est réalisée une languette de verrou (26) pour l'encliquetage du couvercle (13).

4. Dispositif de mise en contact selon l'une des revendications 1 à 3, **caractérisé en ce que** le moyen de verrouillage (24) logé dans le support de contact (11) présente au moins une surface de mise en contact (28), telle que de petits pieds de brasure SMD, disposée de préférence dans le plan des surfaces de mise en contact des contacts de lecture.

5. Dispositif de mise en contact selon l'une des revendications 1 à 3, **caractérisé en ce qu'**au moins un tronçon (27) du moyen de verrouillage (24) est injecté conjointement dans le corps isolant (14) du support de contact (11).
